Europäisches Patentamt

European Patent Office

Office européen des brevets

(19)

(11) Veröffentlichungsnummer: **0 251 073**
**A2**

(12) # EUROPÄISCHE PATENTANMELDUNG

(21) Anmeldenummer: 87108820.9

(22) Anmeldetag: 19.06.87

(51) Int. Cl.³: **B 60 T 10/04**

(30) Priorität: 25.06.86 DE 3621290

(43) Veröffentlichungstag der Anmeldung:
07.01.88 Patentblatt 88/1

(84) Benannte Vertragsstaaten:
DE FR

(71) Anmelder: DORNIER GMBH
Postfach 1420
D-7990 Friedrichshafen 1(DE)

(72) Erfinder: Oberdörffer, Elmar, Dipl.-Ing.
Eckbeck 16
D-7799 Heiligenberg(DE)

(74) Vertreter: Landsmann, Ralf, Dipl.-Ing.
Kleeweg 3
D-7990 Friedrichshafen 1(DE)

(54) Radbremse für Fahrzeuge, insbesondere für Luft- und Raumfahrzeuge.

(57) Die Erfindung betrifft eine Radbremse zum Abbremsen von vorzugsweise nicht angetriebenen Rädern bei Land-, Luft- und Raumfahrzeugen. Die Radbremse besteht aus einem Flüssigkeitskreislauf, bei dem durch das umlaufende Rad 4 eine Verdrängungspumpe 2 betrieben wird, die eine Flüssigkeit, vorzugsweise destilliertes Wasser, über ein Drosselventil 10 in einen Vorratsbehälter 8 und aus diesem dann zurück zur Pumpe fördert. Über das Drosselventil 10, das vorzugsweise von einer Anti-Blockier-Einrichtung gesteuert wird, ist der Bremsdruck einstellbar. Der Vorratsbehälter 8 ist mit einem Überdruckventil 12 versehen, das bei verschieden einstellbaren Drücken, bei Wasser vorzugsweise bei 25 bar, öffnet.

Fig. 1

EP 0 251 073 A2

DORNIER GMBH

7990 Friedrichshafen

Reg. 2552 EU

Radbremse für Fahrzeuge, insbesondere Luft- und Raumfahrzeuge

Die Erfindung betrifft eine Vorrichtung zum Abbremsen von Rädern bei Fahrzeugen, insbesondere bei Luft- und Raumfahrzeugen.

Räder von Fahrzeugen in Luft- und Raumfahrttechnik werden derzeit vorwiegend von Reibungsbremsen verzögert, die allgemein als Mehrscheibenbremsen ausgeführt sind. Die Bremsscheiben bestehen entweder in veralteter Form aus Stahl, oder aus dem sehr teuren Beryllium oder aber aus einem leichten und kostengünstigen Carbon-Carbon-Verbundwerkstoff. Allen Bremsen aus diesen Materialien sind aber folgende drei Nachteile gemeinsam:
- alle zeichnen sich durch eine relativ hohe Masse aus,
- alle unterliegen einem hohen Verschleiß und
- alle geben einen beträchtlichen Teil der Bremsenergie in Form von Wärme an benachbarte Teile wie Räder, Reifen oder Federbeine ab.
Bremsanlagen aus Carbon begünstigen zwar das Gesamtgewicht, aber Carbon ist ein schlechter Wärmeleiter. Bei einer Bremsung kann sich eine Carbon-Bremsanlage auf bis zu 1000° K erhitzen. Luftzufuhr zur Kühlung verbietet sich durch die

/2

Gefahr der Entzündung des Carbons, so dass zur Kühlung nur die Wärmeableitung und Konvektion bleibt. Die somit erforderliche Abkühlzeit der Bremsen kann unter Umständen bestimmend sein für den Zeitpunkt des Neustarts eines Flugzeugs.

Strömungsbremsen sind bekannt aus dem DE-GM 73 43 764 und der DE-OS 17 55 818. Beide Bremsen arbeiten hydrodynamisch, daher kann mit der Strömungsbremse allein kein Abbremsen bis zum Stillstand vorgenommen werden. Es muß also noch eine Reibungsbremse bekannter Bauart hinzukommen, die bei Unterschreitung einer Grenzgeschwindigkeit eingesetzt wird. Das beinhaltet einen höheren Bauaufwand, ein höheres Gewicht und einen höheren Preis.

Der Erfindung liegt die Aufgabe zugrunde, eine Bremseinrichtung zu finden, die verschleißfest ist und die dem Gesichtspunkt der Gewichtsreduzierung besonders im Luft- und Raumfahrtsektor entgegenkommt.

Die Aufgabe wird erfindungsgemäß durch den Hauptanspruch und seine Unteransprüche gelöst.

Dabei löst sich die Erfindung vom hydrodynamischen Prinzip und arbeitet hydrostatisch. Eine durch das drehende Rad angetriebene Verdrängungspumpe fördert permanent Flüssigkeit durch einen Kreislauf. In diesen Kreislauf integriert ist ein Drosselventil und ein Vorratsbehälter für die Flüssigkeit. Durch zunehmendes Schließen des Drosselventils wird der Druck im Kreislauf erhöht und die Pumpe muß gegen einen erhöhten Druck arbeiten. Dadurch werden die Drehungen der Zahnräder der Pumpe behindert und gleichzeitig der Lauf der Räder erschwert, daher verlangsamen sie ihre Drehbewegung.

Dieser Bremsvorgang erzeugt Bremsenergie in Form von Wärme. Sie wird von der Flüssigkeit ständig aufgenommen und zum Vorratsbehälter transportiert. Dort erhöht sich der Druck bis zu einem einstellbaren maximalen Druck. Darüberhinaus ausgehende Wärmezufuhr führt zu einem Verdampfen der Flüssigkeit. Die die Flüssigkeit fördernde Verdrängungspumpe befindet sich in einer Ausführungsform als einziges Bauteil direkt am Rad oder wird in das Rad integriert. Somit ist lediglich die Masse der Pumpe zur ungefederten Masse des Rades hinzuzuaddieren. Alle anderen Bauteile können anderswo an oder im Fahr- oder Flugzeug befestigt sein. Wichtig ist dies auch besonders bei ausklappbaren Flugzeugrädern und Raumfahrzeugrädern, da das Gewicht der auszuklappenden Teile gering bleibt. Das Drosselventil und der Vorratsbehälter kann für jedes Rad separat vorhanden sein. Dadurch läßt sich jedes Rad extra abbremsen und es läßt sich eine Dosierung der einzelnen Bremskräfte vornehmen. Die Betätigung des Drosselventils mittels AntiBlockiereinrichtung kann für jedes Rad gesteuert werden und bewirkt ein optimales Erreichen der Schlupfgrenze. Als andere Ausführungsformen kommen noch Drosselventile und/oder Vorratsbehälter für auf einer Achse bei Landfahrzeugen oder für auf einer Ebene in Flugrichtung (einer geometrischen Achse) bei Flugzeugen liegende Räder in Betracht. Dadurch lassen sich beispielsweise Vor- und Hinterachse getrennt ansteuern und mit unterschiedlichem Druck abbremsen. Ebenso ist es denkbar, nur ein Drosselventil und einen Vorratsbehälter für alle Räder zu verwenden. Aus Sicherheitsgründen sind mehrere Drosselventile vorzugsweise vorzusehen, wobei die diagonal einander gegenüberliegenden Räder jeweils von einem Drosselventil gesteuert werden können. Ein Mehrkreisbremssystem ist so mit mehreren Drosselventilen herstellbar.

Als Flüssigkeit wird - bevorzugt destilliertes - Wasser verwendet. Wasser besitzt eine sehr hohe Wärmekapazität und eignet sich daher besonders zur Aufnahme der Bremsenergie. Gleichermaßen hat Wasser den Vorteil, dass eine eventuelle Leckage des Kreislaufs nicht zu einer Verschmutzung der Umwelt und der die Bremse umgebenden Fahrzeug- oder Flugzeugteile führt. Wasser ist zudem billig, auch in destillierter Form, und steht unbegrenzt zum Nachfüllen der Vorratsbehälter zur Verfügung.

Die Erfindung wird anhand von Figuren näher erläutert.

Es zeigen:
Figur 1   ein Funktionsschema der Radbremse,
Figur 2   eine Zahnradpumpe im Schnittbild und
Figur 3   eine Pumpe nach dem Eaton-Prinzip geöffnet.
Figur 4a einen Längs- und
Figur 4b einen Querschnitt durch eine vorteilhafte
          Ausführungsform.

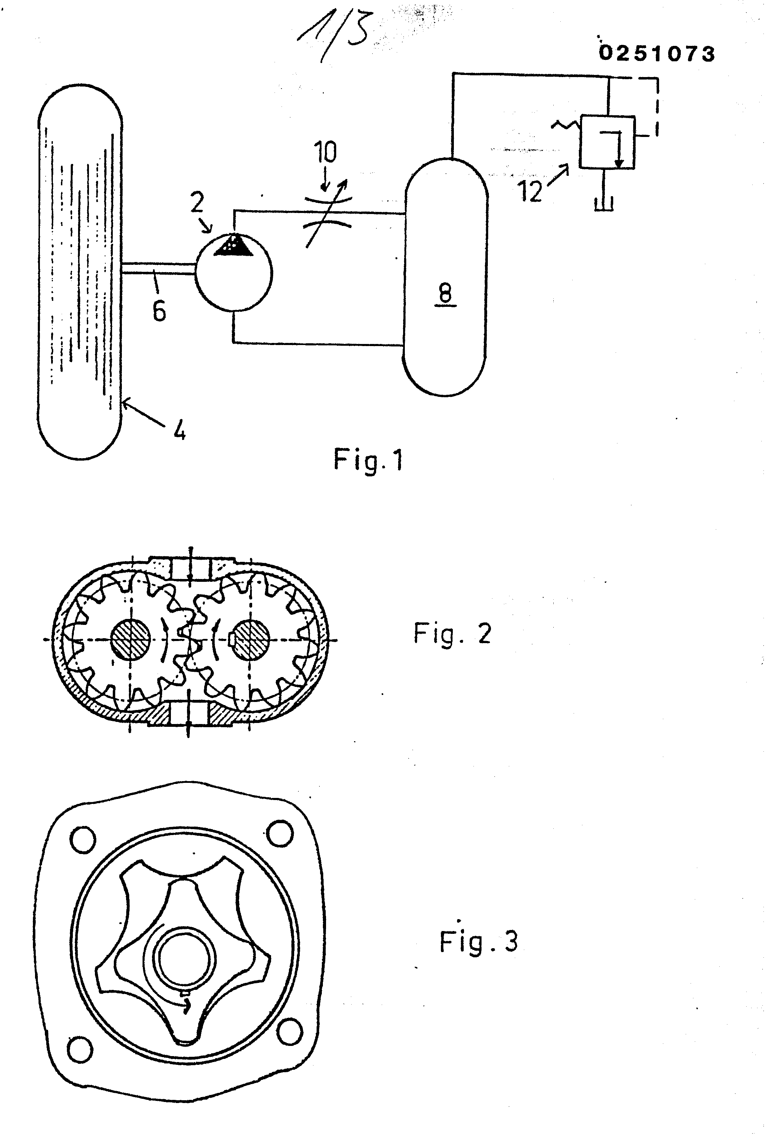

Figur 1 zeigt die erfindungsgemäße Bremse, die aus einem hydraulischen Kreislauf besteht, in dem eine Verdrängungspumpe 2 vom abzubremsenden Rad 4 über eine Welle 6 angetrieben wird. Diese Pumpe 2 saugt destilliertes Wasser aus einem Vorratsbehälter 8 an und fördert das Wasser über ein regelbares Drosselventil 10 wieder in den Vorratsbehälter 8 zurück. Mit Hilfe des Drosselventils 10 läßt sich der Förderdruck der Pumpe 2 beliebig einstellen und somit das gewünschte Bremsmoment erzeugen. Die Regelung des Drosselventils wird vorzugsweise einer elektronischen Anti-Blockiereinrichtung übertragen, die durch Betätigen des Bremspedals aktiviert wird. Der größte Teil der Bremsenergie wird vom Wasser aufgenommen und führt zu einer Temperaturerhöhung des Wassers. Gleichzeitig steigt der Druck im Vorratsbehälter 8 an. Dieser in den Kreislauf integrierte Vorratsbehälter 8 ist mit einem Überdruckventil 12 versehen. Der Öffnungsdruck des Ventils liegt bei der Verwendung von Wasser, vorzugsweise bei etwa 25 bar, da bei diesem Druck die Enthalpie des gesättigten Wasserdampfs ihr Maximum erreicht. Ist der Dampfdruck im Vorratsbehälter 8 gleich dem Öffnungsdruck des Ventils 12, dann führt eine weitere Energiezufuhr nur noch zum Verdampfen des Wassers, aber nicht mehr zu einer weiteren Temperaturerhöhung.

Figur 2 und Figur 3 zeigen zwei vorteilhafte Ausführungsformen einer Verdrängungspumpe. Figur 2 zeigt eine Zahnradpumpe, während Figur 3 eine Pumpe nach dem Eaton-Prinzip zeigt. Beide Pumpenarten werden, ebenso wie eine ebenfalls denkbare Zahnradsichelpumpe, als Ölpumpen in Verbrennungsmotoren verwendet, aber auch jede andere Verdrängungspumpe mit kontinuierlicher Förderung ist geeignet, beispielsweise Flügelpumpen, Radialwellenpumpen oder Rotorpumpen.

Eine vorteilhafte Ausführung besteht darin, die gesamte Bremsanlage mit dem Vorratsbehälter in das Rad zu integrieren, wobei der drehende Radkörper als Vorratsbehälter dient. Dann formt das Wasser durch die Zentrifugalkraft einen konzentrischen Ring um die Radachse und der Wasserdampf sammelt sich in einem zentralen Raum. Der Wasserring rotiert mit der gleichen Geschwindigkeit wie das Rad. Durch die Bremsenergie wird das Wasser erhitzt, bis der Dampfdruck gleich dem Öffnungsdruck des Überdruckventils ist.

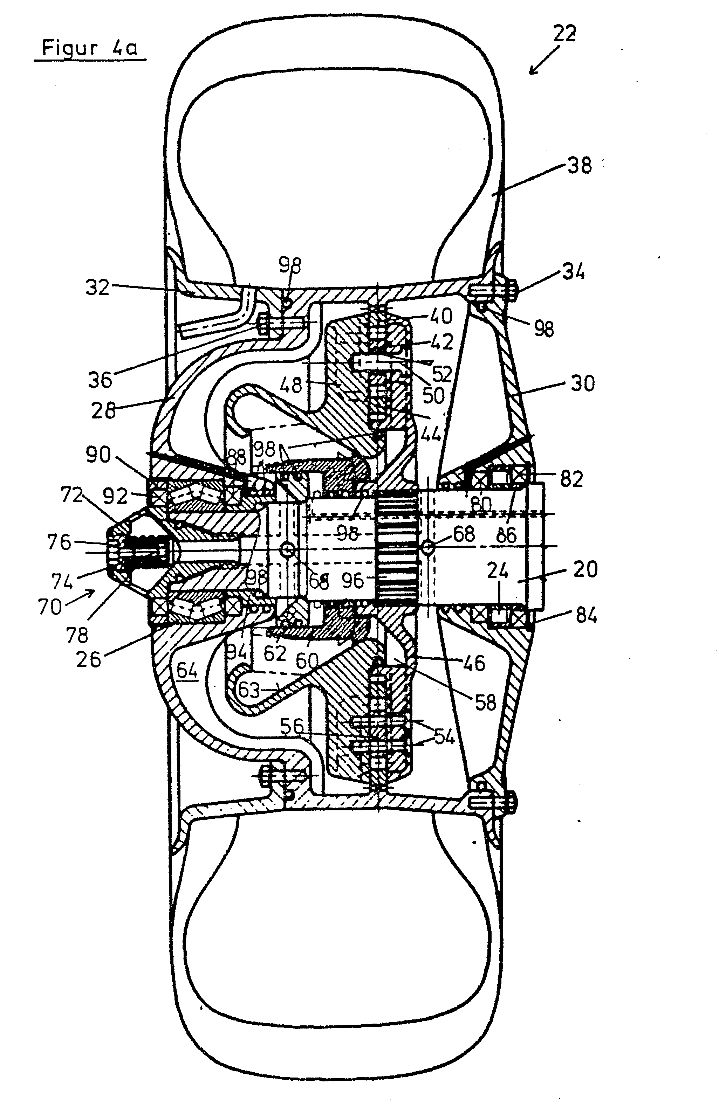

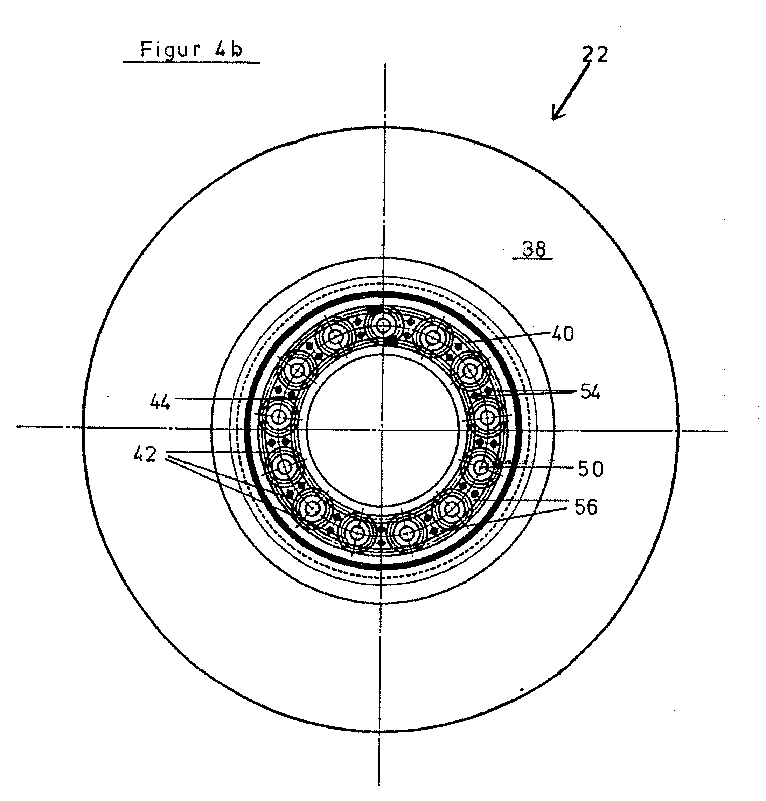

Die Figuren 4a und 4b zeigen einen Längs- und einen Querschnitt der vorgeschlagenen Radbremse.
Auf der Achse 20 ist das Rad 22 mit Hilfe der Lager 24 und 26 gelagert. Das Rad 22 enthält eine Radschale 28, eine weitere Radschale 30 und eine Felge 32, die von einer auf einem Kreis angeordneten Anzahl von Schraubenbolzen 34 und Muttern 36 zusammengehalten sind und auf denen der Reifen 38 befestigt ist. Die Bremsanlage ist in den inneren Zwischenraum, der von den Schalen 28 und 30 gebildet wird, integriert. In diesem Zwischenraum befindet sich auch das Wasser. Als Pumpe fungiert eine Zahnradpumpe, die ein äusseres Zahnrad 40, das durch eine Verzahnung mit der Radschale 28 gekoppelt ist, dreizehn kleinere Zahnrädern 42, die mit den inneren Zähnen des Zahnrades 40 kämmen, und ein inneres, frei laufendes Zahnrad 44 enthält, das beim Drehen mit den Zahnrädern 42 kämmt und der Verdoppelung der Kämmvorgänge dient. Die erwähnten Zahnräder laufen zwischen den beiden Abdeckplatten 46 und 48. Diese Abdeckplatten werden von Schrauben 50, die wiederum Hülsen 52 tragen, die als Lager für die Zahnräder 42 dienen, und von Schrauben 54, die die Formstücke 56, die die Gleitflächen der Zahnräder 40, 42 und 44 bilden, in ihren Positionen halten, zusammengehalten.

Die Pumpe saugt das Wasser durch Kanäle (gestrichelt dargestellt) in der dicken Abdeckplatte 48 an und presst es dann durch Kanäle in der gegenüberliegenden Platte 46 in einen toroidalen Raum 58, der die Achse umgibt. Der entstehende Druck wird von einem Ringkolben 60 kontrolliert, der auf der Achse 20 und auf einem Ring 62 gleitet. Der Hohlraum, der druch Ring 62 und Ringkolben 60 gebildet wird, wird durch eine hydraulische Flüssigkeit unter Druck gesetzt, der vom Bremspedal des Piloten ausgehend über ein Antiblockiersystem (hier nicht gezeigt) kontrolliert wird. Der Kolben 60 formt einen engen Spalt mit der Abdeckplatte 48, durch den das Wasser in Form eines ringförmigen dünnen Strahls mit hoher Geschwindigkeit herausspritzt. Der Strahl schießt entlang der inneren konischen Oberfläche 62 des Teils 48 und wird dann nach innen abgelenkt, so dass er auf sich selbst zurückfällt.

Hierdurch wird ein hoher Verwirbelungsgrad auf engstem Raum erzielt, wobei der Übergang von kinetischer Energie zu Wärmeenergie hauptsächlich stattfindet. Das aufgeheizte Wasser wird dann durch radial in der Schale 28 angeordnete Rippen 64 in Umfangsrichtung beschleunigt und wird durch die Zentrifugalkraft nach außen in die Ansaugteile der Pumpe gezwungen.

Der entstehende Wasserdampf kann durch Aussparung im Ring 62 in Kanäle 68 fließen, die in die Achse 20 eingearbeitet sind und auf der einen Seite zum Wasserreservoir zwischen Schale 30 und Abdeckplatte 46 und auf der anderen Seite zum Überdruckventil 70 führen. Es ist günstig, Dampfpassagen zu diesem Wasserreservoir vorzusehen, damit das hier enthaltene Wasser aufgeheizt werden kann und damit das Wasser gezwungen werden kann, durch Spalten, die zwischen den Zähnen der Schale 28 und Zahnrad 40 gelassen wurden, zu den Ansaugstellen der Pumpe zu gelangen.

Das Überdruckventil 70 besteht aus einem Ventilkörper 72, einem Ventilkonus 74, der in einem Gehäuse 76 gleitet, und einer Feder 78.

Die äussere Schale des innenliegenden Lagers 24 wird an seinem Platz in der Schale 30 zusammen mit den Dichtungen 80 und 82 von einem Seegerring 84 gehalten. Die innere Lagerschale sitzt fest auf der Achse und ist gegen einen Zwischenring 86 gepresst, der die abgerundete Schulter der Achse 20 abdeckt.

Die äussere Schale des Lagers 26 wird zusammen mit der Dichtung 88 von einem Ring 90 in Position gehalten, der in die Schale 28 eingeschraubt ist, die auch die Dichtung 92 enthält. Die innere Lagerschale ist vom Ventilkörper 72 auf der Achse 20 gehalten, der in die Achse 20 eingeschraubt ist. Mit Hilfe des Zwischenrings 94 ist auch der Ring 62 gegen die konische Schulter der Achse gepresst, wodurch der Hohlraum für die hydraulische Flüssigkeit abgedichtet ist. Die innere Abdeckplatte 46 der Pumpe überträgt das Bremsmoment über eine Verzahnung 96 auf die Achse 20. Dichtungseinrichtungen 98 sind an allen kritischen Punkten vorgesehen.

Der Reifen wird gewechselt, indem die Luft aus ihm herausgelassen wird, dann die Schraubenmuttern 36 herausgedreht werden und die Felge 32 abgenommen wird. Danach kann der Reifen 38 von der Schale 28 abgezogen werden. Die Montage erfolgt in umgekehrter Reihenfolge. Rad und Bremse sind vom Reifenwechsel nicht betroffen.

Das Rad 22 kann von der Achse 20 entfernt werden, nachdem der Ventilkörper 72 des Überdruckventils 70 abgebaut wurde. Eine Gleitmöglichkeit ist vorgesehen zwischen der inneren Lagerschale des Lagers 26 und der Achse 20, ebenso wie zwischen Zwischenring 94, Ring 62, Kolben 60 und Abdeckplatte 46, während die äussere Lagerschale des Lagers 24 und ihre Rollen axial frei auf der inneren Lagerschale gleiten können. So kann die gesamte Rad- und Bremsanlage auf und von der Achse 20 verschoben werden, wobei nur die innere Lagerschale des Lagers 24 und der Zwischenring 86 auf der Achse 20 bleibt. Nach der Abnahme des Rades kann die Schale 30 durch Abschrauben der Muttern 36 entfernt werden. Danach läßt sich die Pumpe aus der Schale entnehmen, wonach Kolben 60 und Ring 62 zugänglich sind. Die Pumpe kann durch Entfernen der Schrauben 50 und 54 zerlegt werden. Das Lager 26 kann nach Abschrauben des Rings 90 zusammen mit seinen Dichtungen demontiert werden.

Das Überdruckventil 70 wird nach Herausschrauben des Gehäuses 76 aus dem Ventilkörper 72 abnehmbar. Ein hier nicht gezeigter Füllstutzen ist in der äusseren, leicht zugänglichen
Oberfläche der Schale 28 vorgesehen.

Durch diese Ausführungsform können die Verbindungsleitungen
der einzelnen Aggregate eingespart werden. Ebenso entfällt
die Antriebswelle für die Pumpe.

Statt des gezeigten Überdruckventils kann auch eine Membran
an gegebener Stelle angeordnet sein, die bei Erreichen des
Maximaldrucks platzt und damit den Wasserdampf abläßt.

Selbstverständlich muß das verwendete Wasser bei allen Ausführungsformen gegen Gefrieren in den niedrigen Temperaturen
der hohen Luftschichten oder des Weltraums vorbereitet sein.
Für diesen Zweck kann eine kleine Heizung oder ein Gefrierschutzmittel vorgesehen werden.

Durch die vorliegende Erfindung kann der Verschleiß einer
Verzögerungseinrichtung erheblich reduziert werden, da eine
trockene Reibung wie bei Scheibenbremsen vermieden wird.
Die Temperatur der Bremsanlage bleibt relativ niedrig (ca.
225°C) da sie durch die Verdampfungstemperatur des Wassers
bei dem eingestellten Druck bestimmt ist. Der Aspekt der Gewichtsreduzierung wird durch vorliegende Erfindung erzielt,
weil die Wärmekapazität des Wassers erheblich höher ist als
die Wärmekapazität jeden festen Materials. Es ist also keine
grosse Masse zur Aufnahme der Wärme erforderlich und somit
ist eine Massenreduzierung auf 50 % gegenüber Carbon-Bremsen
möglich. Die erzeugte Bremsenergie wird nicht an benachbarte
Fahrzeugteile, sondern in Form von Wasserdampf an die Umgebung abgegeben. Eine Einsatzbeschränkung der Bremsanlage
durch erforderliche Abkühlzeiten entfällt, da eine Überhitzung nicht stattfindet. Leckagen des Kreislaufsystems

sind bei der Verwendung von Wasser als Flüssigkeit unproblematisch, da eine Beeinträchtigung der Umgebung und anderer
Fahrzeugteile nicht in Betracht kommt; ebenso ist der entstehende Wasserdampf unproblematisch.

15.06.1987
Ro/Sz

DORNIER GMBH

7990 Friedrichshafen


Reg. 2552 EU


P a t e n t a n s p r ü c h e :


1. Radbremse für vorzugsweise nicht angetriebene Räder von Fahrzeugen, insbesondere von Luft- und Raumfahrzeugen, mit einem Flüssigkeitskreislauf, enthaltend eine vom Rad angetriebene Verdrängungspumpe, ein regelbares Drosselventil, einen Vorratsbehälter und zu- und abführende Leitungen, d a d u r c h  g e k e n n z e i c h n e t, dass der Flüssigkeitskreislauf Wasser enthält und ein mit dem Vorratsbehälter in Verbindung stehendes Überdruckventil (12, 70) vorgesehen ist.

2. Radbremse nach Anspruch 1, dadurch gekennzeichnet, dass das regelbare Drosselventil (10, 60) durch eine Anti-Blockiereinrichtung gesteuert ist.

3. Radbremse nach Ansprüchen 1 und 2, dadurch gekennzeichnet, dass das Wasser destilliert ist.

4. Radbremse nach mindestens einem der Ansprüche 1 bis 3, dadurch gekennzeichnet, dass der Druck, bei dem das Überdruckventil (12) öffnet, variabel ist.

5. Radbremse nach mindestens einem der Ansprüche 1 bis 3,

/2

dadurch gekennzeichnet, dass der Druck, bei das Über druckventils (12, 70) öffnet, bei der Verwendung von Wasser 0 bis 25 bar, vorzugsweise 25 bar, ist.

6. Radbremse nach mindestens einem der Ansprüche 1 bis 5, dadurch gekennzeichnet, dass nur die Verdrängungspumpe (2) ungefedert am Rad befestigt ist.

7. Radbremse nach mindestens einem der Ansprüche 1 bis 6, dadurch gekennzeichnet, dass für jedes Rad oder für alle Räder ein Drosselventil (10) vorgesehen ist.

8. Radbremse nach mindestens einem der Ansprüche 1 bis 6; dadurch gekennzeichnet, dass jeweils diagonal gegenüberliegende Räder, oder je Achse oder je geometrischer Achse, nur ein Drosselventil (10) versehen ist.

9. Radbremse nach Anspruch 7, dadurch gekennzeichnet, dass je Rad oder für alle Räder ein Vorratsbehälter (8) mit Überdruckventil (12) vorgesehen ist.

10. Radbremse nach Anspruch 8, dadurch gekennzeichnet, dass je Achse oder je geometrischer Achse oder für jeweils diagonal gegenüberliegende Räder ein Vorratsbehälter (8) mit Überdruckventil (12) vorgesehen ist.

11. Radbremse nach mindestens einem der Ansprüche 1 bis 5, dadurch gekennzeichnet, dass sie komplett in das Rad integriert ist.

12. Radbremse nach Anspruch 11, dadurch gekennzeichnet, dass die Pumpe als Zahnradpumpe mit Planetengetriebe ausgebildet ist, deren Förderstellen konzentrisch um die

0251073

Achse herum angeordnet sind.

13. Radbremse nach Anspruch 11, dadurch gekennzeichnet, dass eine Oberfläche (63) einer Abdeckplatte (48) bogenförmig nach innen gebogen ist, so dass der angepumpte Wasserstrahl auf sich selbst zurückspritzt.

14. Radbremse nach mindestens einem der vorherigen Ansprüche, dadurch gekennzeichnet, dass das Überdruckventil (12, 70) eine Membran mit definierter Reißgrenze ist.

15. Radbremse nach mindestens einem der vorherigen Ansprüche, dadurch gekennzeichnet, dass bei Verwendung in kalten Umgebungen und zur Vermeidung des Gefrierens des Wassers eine Heizeinrichtung vorgesehen ist und/oder dem Wasser ein Frostschutzmittel beigefügt ist.

15.06.1987
Ro/Sz

0251073

Fig.1

Fig. 2

Fig. 3

Figur 4a

0251073

Figur 4b

22

38

40

54

44

42

50

56